# FASCICULE DE BREVET EUROPEEN

(11) **EP 3 804 059 B1**
(45) Date de publication et mention de la délivrance du brevet: **06.11.2024**
(21) Numéro de dépôt: 19744755.0
(22) Date de dépôt: 24.05.2019
(51) Int. Cl.: H02G 3/04, B60R 16/02, H01B 7/00, H02G 3/06, H01R 13/00

(54) **HARNAIS ELECTRIQUE POUR TURBOMACHINE**
ELEKTRISCHER KABELBAUM FÜR EINE TURBOMASCHINE
ELECTRICAL HARNESS FOR A TURBOMACHINE

(30) Priorité: 25.05.2018 FR 1854464
(43) Date de publication de la demande: 14.04.2021
(73) Titulaire: SAFRAN AIRCRAFT ENGINES, 75015 Paris (FR)
(72) Inventeur: MARMET, Eric, Maurice, Daniel, 77550 Moissy-Cramayel (FR); AUDOUX, Clément, Pierre, Bernard, 77550 Moissy-Cramayel (FR); MACHADO, Victorin, 77550 Moissy-Cramayel (FR); PAGES, Jocelyn, Jean, Romolo, 77550 Moissy-Cramayel (FR)
(74) Mandataire: Ernest Gutmann - Yves Plasseraud S.A.S.
(86) Numéro de dépôt international: PCT/FR2019/051210
(87) Numéro de publication internationale: WO 2019/224502

(56) Documents cités:
- EP-A1- 1 443 620
- EP-A1- 1 858 116
- DE-A1- 102005 054 926
- FR-A1- 2 937 471
- KR-A- 20110 135 031

## Description

### DOMAINE

La présente invention concerne un harnais électrique notamment pour l'aéronautique et plus particulièrement destiné à être monté dans une turbomachine telle qu'un turboréacteur ou un turbopropulseur d'avion.

### CONTEXTE

La réduction des dimensions des turbomachines nécessite de trouver des solutions d'harnais électriques dont les dimensions et les caractéristiques leur permettent d'être montés dans des espaces restreints.

Il existe par ailleurs un besoin de développer des harnais électriques pouvant résister à des températures élevées, tout en présentant un encombrement et une masse réduits.

Afin de réduire la masse des harnais électriques, des technologies de gaines de protection à base de matériaux synthétiques thermorétractables, plus légers, peuvent être utilisées dans les zones où les contraintes thermiques sont plus basses et comprises dans une plage de température donnée, par exemple inférieure à 210°C.

Il est par ailleurs également connu d'utiliser des gaines tressées en aciers inoxydables, capables de résister à des températures élevées, supérieures notamment à 210°C.

La transition entre une gaine en acier inoxydable et une gaine en matériau synthétique peut être prévue dans une zone du harnais comportant notamment une partie dite de transition. Cette dernière peut par ailleurs être utilisée pour assurer la fixation du harnais sur une partie fixe de la turbomachine. Une telle fixation est par exemple réalisée par insertion de ladite partie dans une lyre élastique.

Par ailleurs, les harnais électriques possèdent en général des points de dérivation, où un toron de câbles unique est éclaté en plusieurs torons de câbles. Ceci peut être réalisé dans une zone du harnais comportant une partie dite de dérivation. Cette dernière est distincte de la partie de transition et est située en aval ou en amont de la partie de transition. Ladite partie de dérivation peut également comporter une zone permettant la fixation du harnais sur une partie fixe de la turbomachine.

Les zones de fixation du harnais aux parties fixes de la turbomachine peuvent également présenter des défauts de forme, du fait de leur structure, ces défauts de forme rendant plus difficile leur installation sur la turbomachine.

L'utilisation de deux douilles distinctes augmente l'encombrement et la masse du harnais, rendant difficile l'intégration d'un tel harnais dans une turbomachine de faibles dimensions.

Les câbles et les torons de câbles électriques sont par ailleurs entourés extérieurement d'une gaine de blindage électromagnétique. En plus des contraintes précédemment citées, il convient d'assurer la continuité d'un tel blindage au niveau des parties de transition et de dérivation.

EP1443620A1 divulgue un système de modification d'un harnais électrique surtressé comprenant au moins un toron de câbles conducteurs entouré par une tresse de surtressage. Le système de modification se caractérise en ce qu'il comprend : au moins un élément conducteur de modification constitué par au moins un câble conducteur entouré par une tresse de blindage; au moins une portion de gaine de réserve comprenant une portion de tube souple montée en partie dans la tresse dudit harnais de telle manière qu'une première extrémité dudit tube débouche au-delà de l'extrémité de ladite tresse du harnais et que la deuxième extrémité du tube soit extérieure à ladite tresse du harnais en la traversant, au moins ladite partie de portion de tube extérieure à la tresse du harnais étant entourée par une tresse de surtressage.

L'invention vise à remédier en tout ou partie aux inconvénients précités, de façon simple et économique.

### RESUME DE L'INVENTION

A cet effet, la présente invention concerne un harnais électrique selon la revendication 1.

La douille de liaison permet de regrouper la fonction de fixation et la fonction de sertissage des tresses de blindage en un seul élément monobloc rigide. La partie de sertissage est par conséquent suffisamment rigide pour permettre un sertissage des tresses de blindage à l'aide de l'organe de sertissage. Un tel sertissage permet de garantir la continuité électrique du blindage.

Par ailleurs, la forme de la partie de fixation peut être figée, par exemple cylindrique, de manière à faciliter le montage et le positionnement angulaire du harnais sur la partie concernée de la turbomachine.

Les tresses de blindage peuvent être réalisées en matériau tressé, par exemple en alliage à base de cuivre et de nickel.

La douille de liaison peut être par exemple réalisée en métal.

Le harnais peut comporter un seul premier toron de câbles et plusieurs seconds torons de câbles, par exemple deux ou plusieurs seconds torons de câbles.

De plus, l'extrémité de la seconde tresse de blindage, est engagée dans la douille de liaison et peut être rabattue extérieurement à la partie de sertissage, faisant un retour à 180°, l'extrémité de la première tresse de blindage est engagée uniquement extérieurement à la partie de sertissage.

En d'autres termes, l'extrémité de la première tresse de blindage, ne traverse pas la douille de liaison.

Chaque toron de câbles peut être entouré extérieurement, au moins partiellement, d'une première tresse de protection, les premières tresses de protection pouvant se recouvrir dans une zone de recouvrement.

Les premières tresses de protection peuvent être des gaines textiles.

Les premières tresses de protection sont, par exemple, réalisées en méta-aramide.

Les premières tresses de protection peuvent être assemblées l'une à l'autre par couture dans la zone de recouvrement.

Les tresses de blindage peuvent entourer extérieurement les premières tresses de protection.

Chaque toron de câbles peut être entouré extérieurement, au moins partiellement, d'une seconde gaine de protection.

Les secondes gaines de protection peuvent être réalisées en matériau synthétique thermorétractable, par exemple un matériau commercialisé sous la marque VITON^{®} par la société DuPont de Nemours. Les matériaux synthétiques thermorétractables sont légers et peuvent résister à des températures allant jusqu'à 210°C. Les secondes gaines de protection peuvent également être réalisées en matériaux inoxydables, qui résistent à des températures allant jusqu'à 260°C.

L'extrémité de la seconde gaine de protection de l'un des torons de câbles peut être montée extérieurement à la partie de sertissage et extérieurement aux extrémités serties des tresses de blindage.

Ladite extrémité de la seconde gaine de protection peut être fixée par sertissage extérieurement à la partie sertissage, à l'aide de l'organe de sertissage.

Les secondes gaines de protection peuvent entourer extérieurement au moins en partie les tresses de blindage.

Le volume interne de la douille de liaison est rempli, au moins en partie, d'une résine noyant les câbles, la tresse de blindage et/ou les gaines de protection.

L'invention concerne également une turbomachine telle qu'un turboréacteur ou un turbopropulseur d'avion, comprenant au moins un harnais électrique du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en coupe d'un harnais électrique selon une forme de réalisation de l'invention ;
- la figure 2 est une vue schématique de la douille de liaison ;
- la figure 3 est une demi-vue schématique en coupe d'un harnais électrique selon une autre forme de réalisation de l'invention ;
- la figure 4 est une vue en perspective de parties de harnais selon l'invention, fixées à l'aide d'organes de fixation.

### DESCRIPTION DETAILLEE

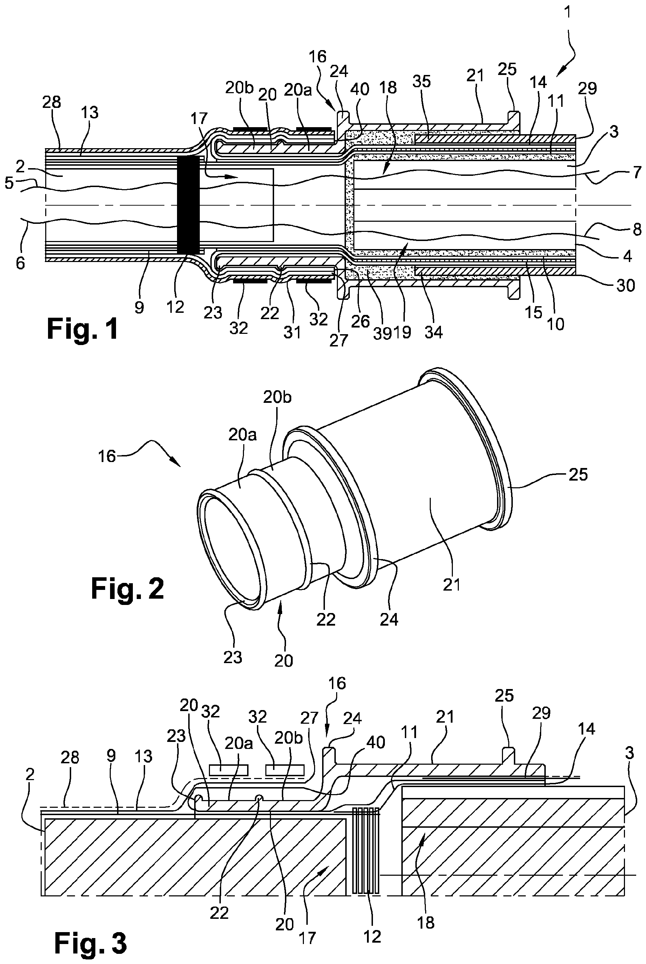

La figure 1 représente une partie d'un harnais 1 selon une première forme de réalisation de l'invention. Le harnais comporte un premier toron de câbles 2 et deux seconds torons de câbles 3, 4, ces câbles étant destinés à l'alimentation de composants de la turbomachine à partir d'une source, ou au transfert de signaux électriques entre des composants. Chaque câble comporte au moins un conducteur électrique. Chaque conducteur électrique 5, 6 du premier câble est dérivé dans les seconds torons de câbles 3, 4 constitués de conducteurs électriques 7, 8.

Le premier toron de câbles 2 et chaque second toron de câbles 3, 4 sont entourés extérieurement d'une première tresse de protection textile. La première tresse de protection 9 du premier toron de câbles 2 et les premières tresses de protection 10, 11 des seconds torons de câbles 3, 4 sont cousues les unes aux autres dans une zone de recouvrement 12. La zone de recouvrement 12 est située extérieurement au premier toron de câbles 2.

Les premières tresses de protection 9, 10, 11 sont par exemple réalisées en un matériau synthétique de type méta-aramide.

Une première tresse de blindage électromagnétique 13 entoure extérieurement le premier toron de câbles 2 et la première tresse de protection 9. De même, chacun des seconds torons de câbles 3, 4 et leurs premières tresses de protection respectives 10, 11 sont entourés extérieurement d'une seconde tresse de blindage électromagnétique 14, 15. Les tresses de blindage 13, 14, 15 sont des gaines tressées en alliage à base de cuivre et de nickel.

Une douille de liaison 16, mieux visible à la figure 2, entoure extérieurement une extrémité 17 du premier toron de câbles 2 et des extrémités 18, 19 des seconds torons de câbles 3, 4.

La douille de liaison 16 est rigide et comporte une partie de sertissage cylindrique 20 et une partie de fixation cylindrique 21, de plus grand diamètre que la partie de sertissage.

La partie de sertissage 20 comporte deux zones cylindriques 20a, 20b espacées l'une de l'autre par un premier rebord annulaire 22 et comporte à son extrémité un second rebord annulaire 23. La partie de fixation comporte deux rebords annulaires 24, 25 situés à ses extrémités.

La douille de liaison 16 peut être réalisée en métal par exemple en acier inoxydable ou en titane ou bien encore en matériau synthétique par exemple en résine chargée de verre.

Des extrémités 27, 26, 40 des premières 13 et secondes tresses de blindage 14, 15 sont engagées extérieurement à la partie de sertissage 20 de la pièce de liaison 16. Les secondes tresses de blindage 14, 15 sont engagées dans la douille de liaison 16 et sont rabattues extérieurement à la partie de sertissage 20, faisant un retour à 180°. En d'autres termes, les secondes tresses de blindage 14, 15 traversent la douille de liaison 16 et sont recourbées telles que des extrémités 26, 40 de ces tresses de blindage entourent extérieurement la surface extérieure de la partie de sertissage 20. La première tresse de blindage 13 ne traverse pas la douille 16 et son extrémité 27 est engagée extérieurement à la partie de sertissage 20.

Une seconde gaine de protection 28, 29, 30 entoure extérieurement chaque toron de câbles, les premières tresses de protection et les tresses de blindage correspondantes. Les secondes gaines de protection peuvent être réalisées par exemple en matériau synthétique thermorétractable, notamment un matériau commercialisé sous la marque VITON^{®} par la société DuPont de Nemours, ou en acier inoxydable tressé.

L'une des extrémités 31 de la seconde gaine de protection 28 du premier toron de câbles 2 est montée extérieurement à la partie de sertissage 20 et extérieurement aux extrémités 27, 26, 40 correspondantes des tresses de blindage. Ces extrémités 31, 26, 27, 40 sont fixées par sertissage extérieurement à la partie de sertissage 20, qui est rigide, à l'aide de colliers de sertissage 32. Un collier de sertissage 32 est monté au niveau de chaque zone 20a et 20b. La rigidité de la partie de sertissage 20 empêche sa déformation lors du serrage des colliers de sertissage 32.

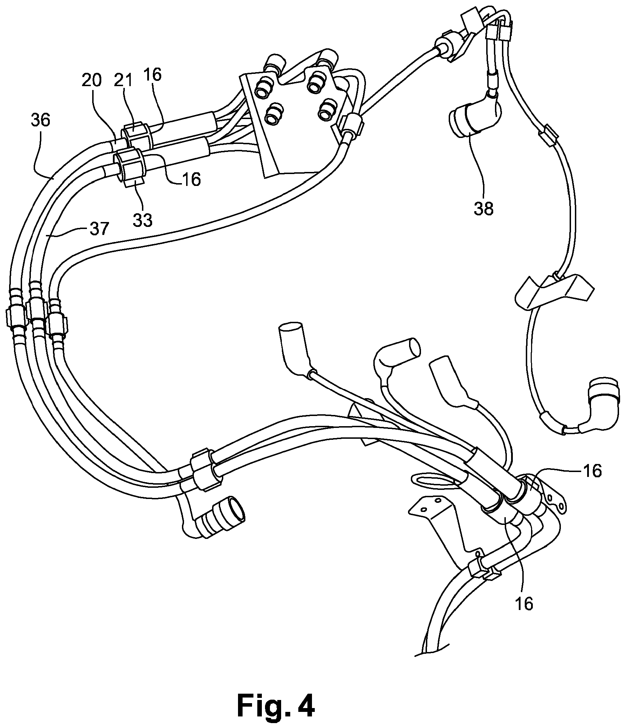

La partie de fixation 21 est par ailleurs destinée à être engagée dans un organe de fixation de la turbomachine, par exemple une lyre de fixation 33 (visible en fig. 4). La rigidité de la partie de fixation 21 permet de garantir la forme de cette partie et facilite ainsi la mise en position par un opérateur sur l'organe de fixation 33.

Les extrémités 34, 35 correspondantes des secondes gaines de protection 29, 30 des seconds torons de câbles 3, 4 sont montées à l'intérieur de la partie de fixation 21. Le volume interne de la partie de fixation 21 est rempli d'une résine 39, par exemple une résine époxyde, noyant les secondes gaines de protection 29, 30 des seconds torons de câbles 3, 4.

La douille de liaison 16 permet ainsi d'assurer à la fois la transition d'une seconde gaine de protection en acier inoxydable à une seconde gaine de protection en matériau synthétique, mais aussi la dérivation d'un toron de câbles en plusieurs torons de câbles. L'utilisation d'une douille 16 unique permet de réduire l'encombrement du harnais électrique, facilitant ainsi l'intégration d'un tel harnais dans une turbomachine de faibles dimensions.

L'agencement des tresses de blindage 13, 14, 15 permet également d'assurer la continuité du blindage électromagnétique au niveau de la douille de liaison.

La figure 3 représente une partie d'un harnais électrique selon une autre forme de réalisation de l'invention. Dans ce mode particulier, la zone de recouvrement 12 où se recouvrent et sont cousues les premières tresses de protection 9, 11 du premier 2 et des seconds torons de câbles 3, 4 est située à l'intérieur de la partie de fixation 21 de la douille de liaison 16.

La figure 4 représente le montage de deux harnais 36, 37 sur des organes de fixation 33. Chaque harnais comporte notamment plusieurs douilles de liaison 16 telles que décrites précédemment. La partie de fixation de chaque douille de liaison 16 est montée par encliquetage dans un organe de fixation 33. En particulier, chaque organe de fixation 33 présente une forme de lyre constituée de deux branches élastiquement déformables, comme cela est connu en soit. Chaque organe de fixation 33 peut être luimême fixé à une partie fixe de la turbomachine. L'organe de fixation 33 peut également être un collier de fixation avec une gaine de silicone.

Chaque harnais 36, 37 comprend en outre des connecteurs 38 pouvant être raccordés à des composants de la turbomachine.

## Revendications

1. Harnais électrique (1) pour turbomachine comportant au moins un premier toron de câbles (2) et au moins un second toron de câbles (3,4), entourés extérieurement respectivement au moins en partie d'une première tresse de blindage (13) et d'une seconde tresse de blindage (14, 15), et une douille de liaison (16) entourant extérieurement une extrémité du premier toron de câbles (17) et une extrémité du second toron de câbles (18, 19), la douille de liaison (16) comporte une partie de fixation (21) destinée à être engagée sur un organe de fixation (33) de la turbomachine, et une partie de sertissage (20), les extrémités (26, 27, 40) des première (13) et seconde tresses de blindage (14, 15) étant engagées extérieurement à la partie de sertissage (20), le harnais électrique (1) comportant au moins un organe de sertissage (32) venant maintenir lesdites extrémités (26, 27, 40) sur la partie de sertissage (20), l'extrémité (26, 27, 40) de la seconde tresse de blindage (14, 15), étant engagée dans la douille de liaison (16) et étant rabattue extérieurement à la partie de sertissage (20), faisant un retour à 180°, l'extrémité (26, 27, 40) de la première tresse de blindage (13) étant engagée uniquement extérieurement à la partie de sertissage (20), lesdites tresses de blindage étantr agencées de façon à assurer une continuité électrique entre lesdites tresses de blindage.

2. Harnais électrique (1) selon la revendication 1, **caractérisé en ce que** chaque toron de câbles (2, 3, 4) est entouré extérieurement, au moins partiellement, d'une première tresse de protection (9, 10, 11), les premières tresses de protection (9, 10, 11) se recouvrant dans une zone de recouvrement (12).

3. Harnais électrique (1) selon la revendication 2, **caractérisé en ce que** les premières tresses de protection (9, 10, 11) sont des gaines textiles.

4. Harnais électrique (1) selon la revendication 3, **caractérisé en ce que** les premières tresses de protection (9, 10, 11) sont assemblées l'une à l'autre par couture dans la zone de recouvrement (12).

5. Harnais électrique (1) selon l'une des revendications 2 à 4, **caractérisé en ce que** les tresses de blindage (13, 14, 15) entourent extérieurement les premières tresses de protection.

6. Harnais électrique (1) selon l'une des revendications 2 à 5, **caractérisé en ce que** chaque toron de câbles (2, 3, 4) est entouré extérieurement, au moins partiellement, d'une seconde gaine de protection (28, 29, 30).

7. Harnais électrique (1) selon la revendication 6, **caractérisé en ce que** l'extrémité de la seconde gaine de protection (28, 29, 30) de l'un des torons de câbles (2, 3, 4) est montée extérieurement à la partie de sertissage (20) et extérieurement aux extrémités (26, 27, 40) serties des tresses de blindage (13, 14, 15).

8. Harnais électrique (1) selon la revendication 6 ou 7, **caractérisé en ce que** les secondes gaines de protection (28, 29, 30) entourent extérieurement au moins en partie les tresses de blindage (13, 14, 15).

9. Harnais électrique (1) selon l'une des revendications 1 à 8, **caractérisé en ce que** le volume interne de la douille de liaison (16) est rempli, au moins en partie, d'une résine (39) noyant les torons de câbles (2, 3, 4), la tresse de blindage (13, 14, 15) et/ou les gaines de protection (9,10, 11, 28, 29, 30).

## Patentansprüche

1. Elektrischer Kabelbaum (1) für eine Turbomaschine bzw. ein Turbotriebwerk mit zumindest einem ersten Kabelstrang (2) und zumindest einem zweiten Kabelstrang (3, 4), die jeweils außen zumindest teilweise von einem ersten Abschirmungsgeflecht (13) bzw. einem zweiten Abschirmungsgeflecht (14, 15) umgeben sind, und einer Verbindungshülse (16), die ein Ende des ersten Kabelstrangs (17) und ein Ende des zweiten Kabelstrangs (18, 19) außen umgibt,
wobei die Verbindungshülse (16) einen Befestigungsabschnitt (21) zum Eingreifen an einem Befestigungsorgan (33) der Turbomaschine bzw. des Turbotriebwerks und einen Crimpabschnitt (20) umfasst, wobei die Enden (26, 27, 40) des ersten (13) und des zweiten (14, 15) Abschirmgeflechts außen am Crimpabschnitt (20) eingreifen, wobei der elektrische Kabelbaum (1) zumindest ein Crimporgan (32) umfasst, das die Enden (26, 27, 40) am Crimpabschnitt (20) hält, wobei das Ende (26, 27, 40) des zweiten Abschirmgeflechts (14, 15) in die Verbindungshülse (16) eingreift und außen am Crimpabschnitt (20) um 180° zurückgeschlagen ist, wobei das Ende (26, 27, 40) des ersten Abschirmgeflechts (14, 15) nur außen am Crimpabschnitt (20) eingreift, wobei die Abschirmgeflechte so angeordnet sind, dass die eine elektrische Durchgängigkeit zwischen den Abschirmgeflechten sicherstellen.

2. Elektrischer Kabelbaum (1) nach Anspruch 1,
**dadurch gekennzeichnet, dass** jeder Kabelstrang (2, 3, 4) außen zumindest teilweise von einem ersten Schutzgeflecht (9, 10, 11) umgeben ist, wobei sich die ersten Schutzgeflechte (9, 10, 11) in einem Überlappungsbereich (12) überlappen.

3. Elektrischer Kabelbaum (1) nach Anspruch 2,
**dadurch gekennzeichnet, dass** die ersten Schutzgeflechte (9, 10, 11) Textilmäntel sind.

4. Elektrischer Kabelbaum (1) nach Anspruch 3,
**dadurch gekennzeichnet, dass** die ersten Schutzgeflechte (9, 10, 11) in dem Überlappungsbereich (12) miteinander vernäht sind.

5. Elektrischer Kabelbaum (1) nach einem der Ansprüche 2 bis 4, **dadurch gekennzeichnet, dass** die Abschirmgeflechte (13, 14, 15) die ersten Schutzgeflechte außen umgeben.

6. Elektrischer Kabelbaum (1) nach einem der Ansprüche 2 bis 5, **dadurch gekennzeichnet, dass** jeder Kabelstrang (2, 3, 4) außen zumindest teilweise von einem zweiten Schutzmantel (28, 29, 30) umgeben ist.

7. Elektrischer Kabelbaum (1) nach Anspruch 6,
**dadurch gekennzeichnet, dass** das Ende des zweiten Schutzmantels (28, 29, 30) einer der Kabelstränge (2, 3, 4) außen am Crimpabschnitt (20) und außen an den gecrimpten Enden (26, 27, 40) der Abschirmgeflechte (13, 14, 15) angebracht ist.

8. Elektrischer Kabelbaum (1) nach Anspruch 6 oder 7,
**dadurch gekennzeichnet, dass** die zweiten Schutzmäntel (28, 29, 30) die Abschirmgeflechte (13, 14, 15) außen zumindest teilweise umgeben.

9. Elektrischer Kabelbaum (1) nach einem der Ansprüche 1 bis 8, **dadurch gekennzeichnet, dass** das Innenvolumen der Verbindungshülse (16) zumindest teilweise mit einem Harz (39) gefüllt ist, das die Kabelstränge (2, 3, 4), das Abschirmgeflecht (13, 14, 15) und/oder die Schutzmäntel (9, 10, 11, 28, 29, 30) einbettet.

## Claims

1. Electrical harness (1) for a turbomachine, having at least one first cable strand (2) and at least one second cable strand (3, 4), which are respectively at least partially surrounded on the outside by a first shielding braid (13) and a second shielding braid (14, 15), and having a connecting socket (16) surrounding externally one end of the first cable strand (17) and one end of the second cable strand (18, 19),
the connecting socket (16) comprising a fixing part (21) intended to be engaged on a fixing member (33) of the turbomachine, and a crimping part (20), the ends (26, 27, 40) of the first (13) and second shielding braids (14, 15) being engaged externally to the crimping part (20), the electric harness (1) comprising at least one crimping member (32) holding said ends (26, 27, 40) on the crimping part (20), the end (26, 27, 40) of the first (13) or second (14, 15) shielding braid being inserted into the connecting socket (16) and being bent back through 180° outside the crimping part (20), the end (26, 27, 40) of the second (14, 15) or first (13) shielding braid being inserted only outside the crimping part (20), said shielding braids being arranged so as to guarantee electrical continuity between the shielding braids.

2. Electrical harness (1) according to claim 1, **characterised in that** each cable strand (2, 3, 4) is at least partially surrounded externally by a first protective braid (9, 10, 11), the first protective braids (9, 10, 11) overlapping in an overlapping region (12).

3. Electrical harness (1) according to claim 2, **characterised in that** the first protective braids (9, 10, 11) are textile sheaths.

4. Electrical harness (1) according to claim 3, **characterised in that** the first protective braids (9, 10, 11) are sewn together in the overlapping area (12).

5. Electrical harness (1) according to one of claims 2 to 4, **characterised in that** the shielding braids (13, 14, 15) surround externally the first protection braids.

6. Electrical harness (1) according to one of claims 2 to 5, **characterised in that** each cable strand (2, 3, 4) is at least partially surrounded externally by a second protective sheath (28, 29, 30).

7. Electrical harness (1) according to claim 6, **characterised in that** the end of the second protective sheath (28, 29, 30) of one of the cable strands (2, 3, 4) is mounted externally on the crimping part (20) and externally on the crimped ends (26, 27, 40) of the shielding braids (13, 14, 15).

8. Electrical harness (1) according to claim 6 or 7, **characterised in that** the second protective sheaths (28, 29, 30) externally surround at least partially the shielding braids (13, 14, 15).

9. Electrical harness (1) according to one of claims 1 to 8, **characterised in that** the inner volume of the connecting socket (16) is at least partially filled with a resin (39) embedding the cable strands (2, 3, 4), the shielding braid (13, 14, 15) and/or the protective sheaths (9, 10, 11, 28, 29, 30).
